## Europäisches Patentamt
## European Patent Office
## Office européen des brevets

(11) Publication number: **0 053 640**
**A1**

## EUROPEAN PATENT APPLICATION

(21) Application number: **80304388.4**

(22) Date of filing: **04.12.80**

(51) Int. Cl.³: **G 03 B 37/00**
**G 01 C 11/02, G 03 B 17/24**

(43) Date of publication of application:
**16.06.82 Bulletin 82/24**

(84) Designated Contracting States:
**DE GB SE**

(71) Applicant: **INTERVAL EIZO YUGEN KAISHA**
**5.26 Hiranomachi**
**Higashiku Osaka(JP)**

(72) Inventor: **Fujimoto, Kazuo**
**6-17-1, Ohi Shinagawaku**
**Tokyo(JP)**

(72) Inventor: **Hirai, Jyuro**
**5-26 Hiranomachi**
**Higashiku Osaka(JP)**

(74) Representative: **Smith, Philip Antony et al,**
**REDDIE & GROSE 16 Theobalds Road**
**London WC1X 8PL(GB)**

(54) **A computerized control for aerial photography.**

(57) For an aeroplane having two or more cameras with different lens angles, the intervals between operations of the shutters of all the cameras are controlled to ensure full coverage of the area being photographed without wastage of film. The inputs to the computer (31) are of aircraft speed (17) and altitude (18), percentage overlap (19) between successive pictures, and lens angle (5). These are used to calculate for each camera the interval between exposures, which is stored in a latch circuit (32) and displayed by indicator (6). Start and stop buttons (22) and (23) control an interval timer (33) which through gate (34), amplifier (35), and shutter circuit (36) effects the operation of the shutter at intervals determined by the value stored in latch (32). Facilities are also described for transcribing reference data onto the film.

./...

EP 0 053 640 A1

FIG. 3

A COMPUTERIZED CONTROL

FOR AERIAL PHOTOGRAPHY

The present invention relates to a computerized control for aerial photography, and more particularly, to a computerized control for aerial photography for use in association with aerial cameras mounted in an aeroplane. The cameras are mounted with different lens angles to the ground but with equal overlap rates, and take photographs in succession at different altitudes and speeds along the line of flight under the computerized control.

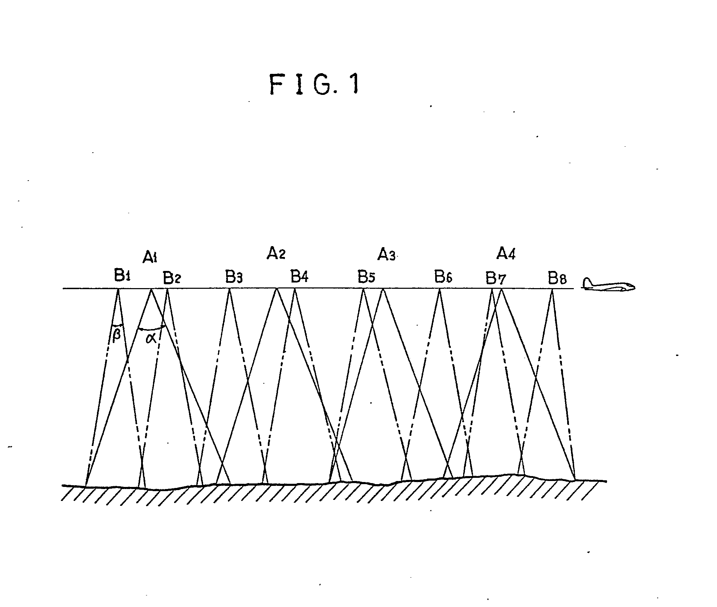

Referring to Figure 1 two cameras are mounted in the aeroplane, one being with an angle of $\alpha$ while the other being with an angle of $\beta$. Suppose that the aeroplane flies at a constant altitude and speed, the shutter of one camera is opened at points $A_1$, $A_2$, $A_3$ and $A_4$, while that of the other is opened at points $B_1$, $B_2$, $B_3$, $B_4$, $B_5$, $B_6$, $B_7$ and $B_8$.

In such a situation, it is difficult to open the shutters of each camera independently of each other, and to secure a series of photographs of the ground without the waste of film.

The present invention aims at overcoming such difficulties, and has for its object to provide a computerized control for opening the shutters of a plurality of cameras independently of one another thereby to secure a series of photographs of the ground without the waste of film.

- 1 -

Another object of the present invention is to provide a computerized control for aerial photography in which various data, such as camera numbers and dates, is transcribed in the film together with the images of the ground.

According to the invention, a computerized control for aerial photography includes means for inputting as data the altitude and speed of flight, means for setting the overlap rate between the adjacent photographs and the lens angles, an arithmetic unit for calculating interval time through arithmetical operations on said altitude, speed, overlap rate and lens angles, and an output device for producing shutter driving signals at said interval time rasulting from said arithmetical operations, said signals being produced with respect to all the cameras mounted in the aeroplane, thereby enabling each shutter to be driven at independently different interval time.

The invention is diagrammatically illustrated by way of example with reference to the accompanying drawings, in which:

Figure 1 is a schematic view showing the relationship among an aeroplane, cameras and the ground for aerial photography;

Figure 2 is a schematic front view of the panel of a computerized control of the invention;

Figure 3 is a block diagram of the computing system of the invention;

3

Figure 4 is a flow chart showing an example of the computer programme of the invention;

Figure 5 is a perspective view showing a device for transcribing data in the film;

Figure 6 is an electric block diagram for the device of Figure 5;

Figure 7 is a time chart illustrating the operations taking place under the diagram of Figure 6;

Figure 8 is a schematic view of portion of a film in which data is transcribed; and

Figure 9 is a perspective view showing an alternative embodiment of a data transcribing unit.

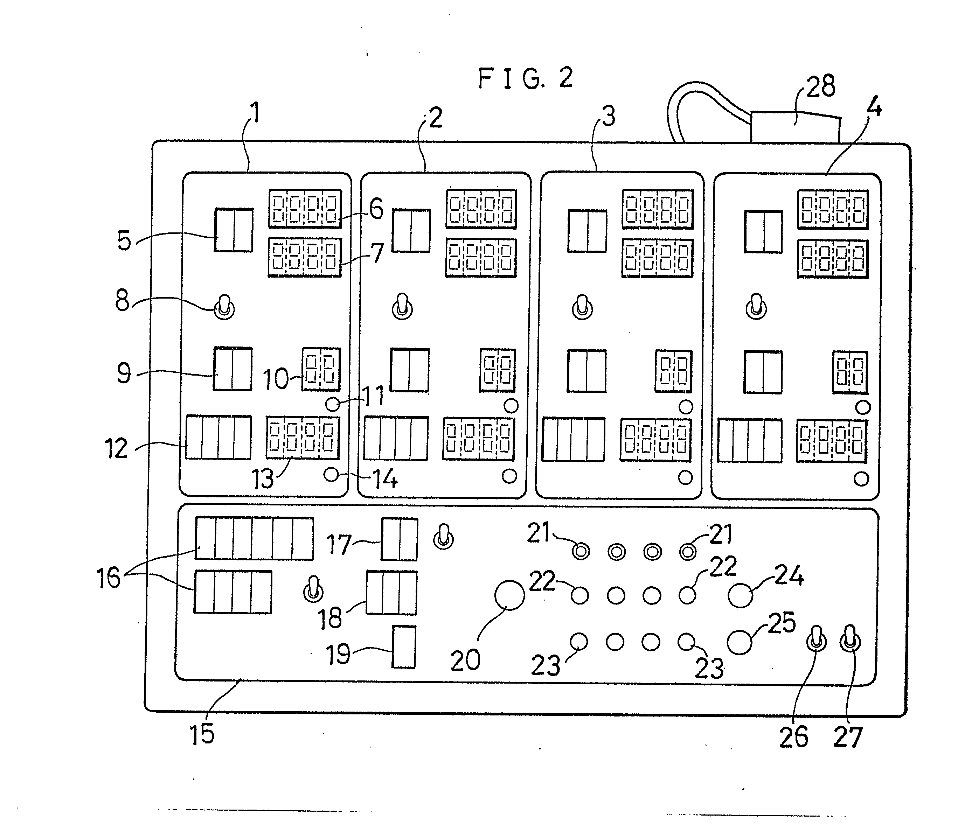

Referring to Figure 2 the reference numerals 1, 2, 3 and 4 designate a first block, a second block, a third block and a fourth block, respectively, each of which accommodates an aerial camera. This means that the illustrated control system can control four cameras. In addition to the camera, each block is provided with a digital switch 5 for setting and indicating the lens angle, a digital display 6 for indicating the interval (second) calculated by the computer, a digital display 7 for indicating the time (seconds) remaining before starting photo-taking, a camera operation switch 8, a digital switch 9 for setting the number of exposures to be photographed in, a digital display 10 for indicating the number of unphotographed exposures counted down from the set number, a press button 11 for presetting the set value of the digital switch 9 to a down-counter, a digital switch 12 for setting the number of exposures to have been photographed in by the previous day, a digital display 13 for indicating the total number of exposures which have been photographed in as of that day, and a press button 14 for presetting the set value of the digital switch 12 to an up-counter.

In the lower section of the panel, a digital time-indicator 16 (second, minute, hour, day, month and year), a digital switch 17 for setting the speed (knots or miles per hour) of the aeroplane, a digital switch 18 for setting the altitude (feet) of the aeroplane, a digital switch 19 for setting the rate of overlap for successive photo-taking, a press button 20 for starting the computer, interrupt shutter buttons 21 for opening the shutter in each camera by hand at any time when desired, start buttons 22 for starting interval timers, stop buttons 23 for stopping the interval timers, a start button 24 for starting all the interval timers of the cameras, a stop button 24 for simultaneously stopping the interval timers, a switch 26 for power supply for an electronic clock and a switch 27 for power supply for the whole system. A connector 28 for power supply is provided on top of the panel, at which the system is electrically connected to a battery (not shown).

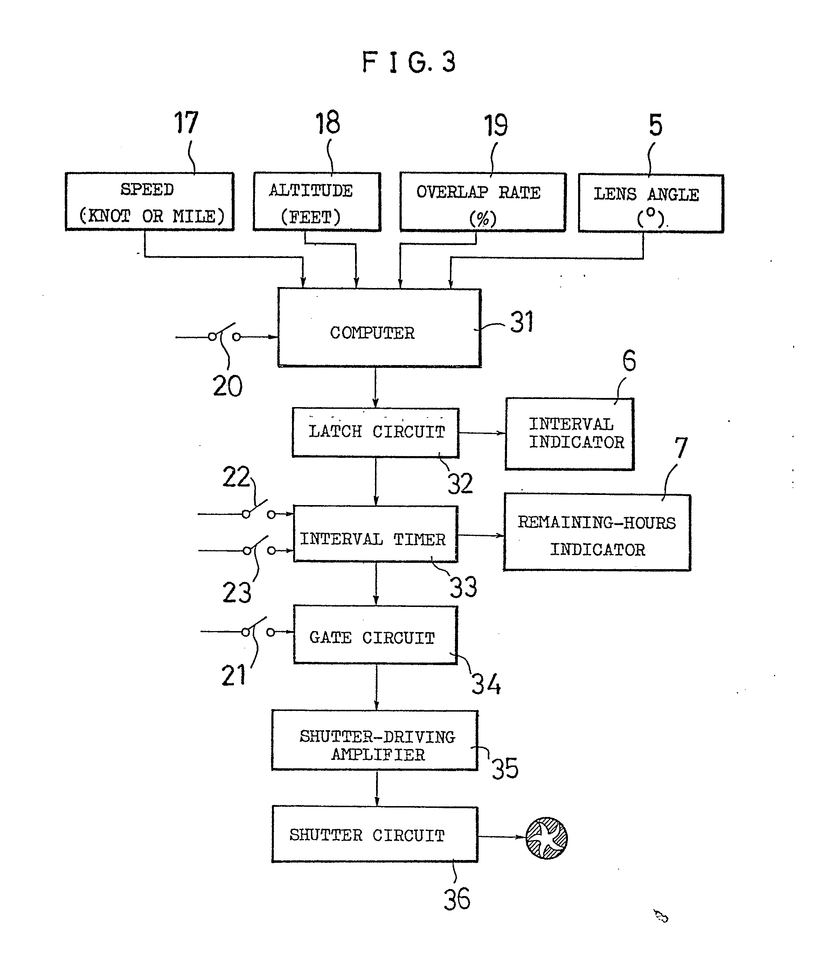

Referring to Figure 3 the data set by the switches 17, 18, 19 and 5, that is, the speed, the altitude, the overlap rate and the lens angle, are input to a computer 31 as BCD (binary coded decimal) codes. The reference numeral 32 designates a latch circuit at which the desired interval is temporarily memoried, the interval being calculated in accordance with the formula referred to below. When the press button 20 is actuated, the computer 31 is energized for about 3 seconds, and starts operation. The results of operation are stored in the latch circuit 32 for each camera, and then the computer 31 is de-energized. Such short-term energization of the computer is intended to save the life of the battery and secure a prolonged photo-taking in flight. The memory in each latch circuit 32 is not only indicated on the interval display 6 but also it is applied to the interval timer 33. The interval timer 33, once the button 22 has been pressed, continues to output pulses at the intervals specified by the latch circuit 32 until the stop button 23 is pressed, which pulses cause the shutters of the cameras to open. At the same time, the interval timer 33 outputs to the display 7 so as to indicate the time remaining before starting the photo-taking. A gate circuit 34 guides the pulses from the interval timer 33 to an amplifier 35 for opening the shutter, and when one interrupt shutter button 21 is actuated, it provides a single gate output independently of the state of the interval timer 33. The output of each amplifier 35 is connected to a shutter circuit 36 of the camera.

The formula written in the ROM for a computer program is as follows:

$$TI = \frac{2AL \cdot \tan \frac{\theta}{2} \ ( \ 1 \ - \ OL \ )}{GS} \ \ \ldots \ldots \ (1)$$

wherein AL is altitude, GS is speed (with respect to the ground), $\theta$ is lens angle, OL is overlap rate and TI is interval time. $\tan \frac{\theta}{2}$ can be solved by the series expansion, but this method would require many steps for the program. Therefore, in this invention a table is previously prepared and written in the ROM in which the values of $\tan \frac{\theta}{2}$ are given at every 1° or 0.5° correspondingly to 10° to 90° of applicable lens angles, and the required value will be read out from the table.

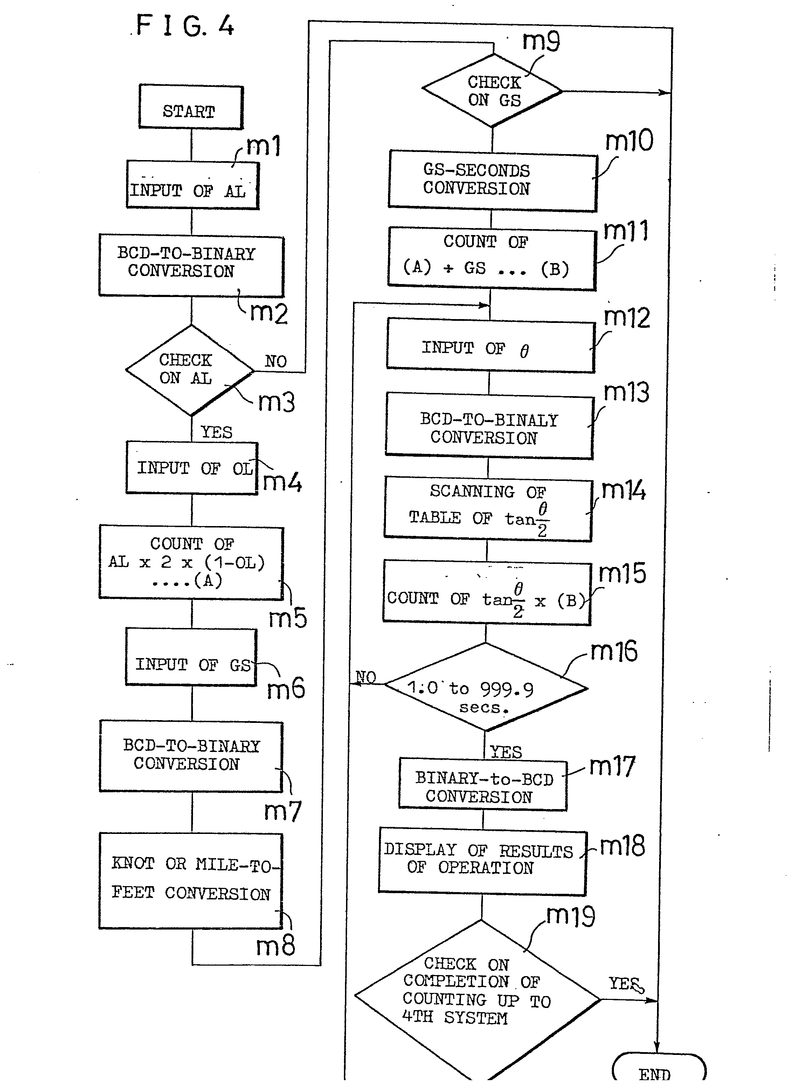

Referring to Figure 4 the sequence of process of the computer will be explained:

The data set by the digital switches is input as BCD to the computer, and is converted into binary digits. The data is checked as to whether it falls in the specified range. In addition, knots or miles are calculated in terms of feet, and then the value of $\tan \frac{\theta}{2}$ is decided by reference to the table mentioned above. The value of $\tan \frac{\theta}{2}$ is placed in the formula (1), and the obtained value is checked as to whether it falls in the specified range, e.g. 1.0 to 999.9 secs. The resulting values are represented in binary digits, and are converted into BCD

7

notation for output. In Figure 4 the operations at the stages $m_{12}$ to $m_{18}$ finish up with the check provided at the final stage $m_{19}$, after all the expected operations with respect to the four cameras have been performed in sequence.

Alternatively, the altitude and speed of flight can be taken from the altimeter and the speedometer, respectively, through an A-D converter, and can be input to the computer.

The data is transcribed in the film together with the image of the ground. For example, a code name, such as AF36E: camera number and film counter number, such as 2C4531: and dates, such as 79(year) 03(month) 21(day) 08(hour) 36(minute) 25(second), are transcribed in the photograph.

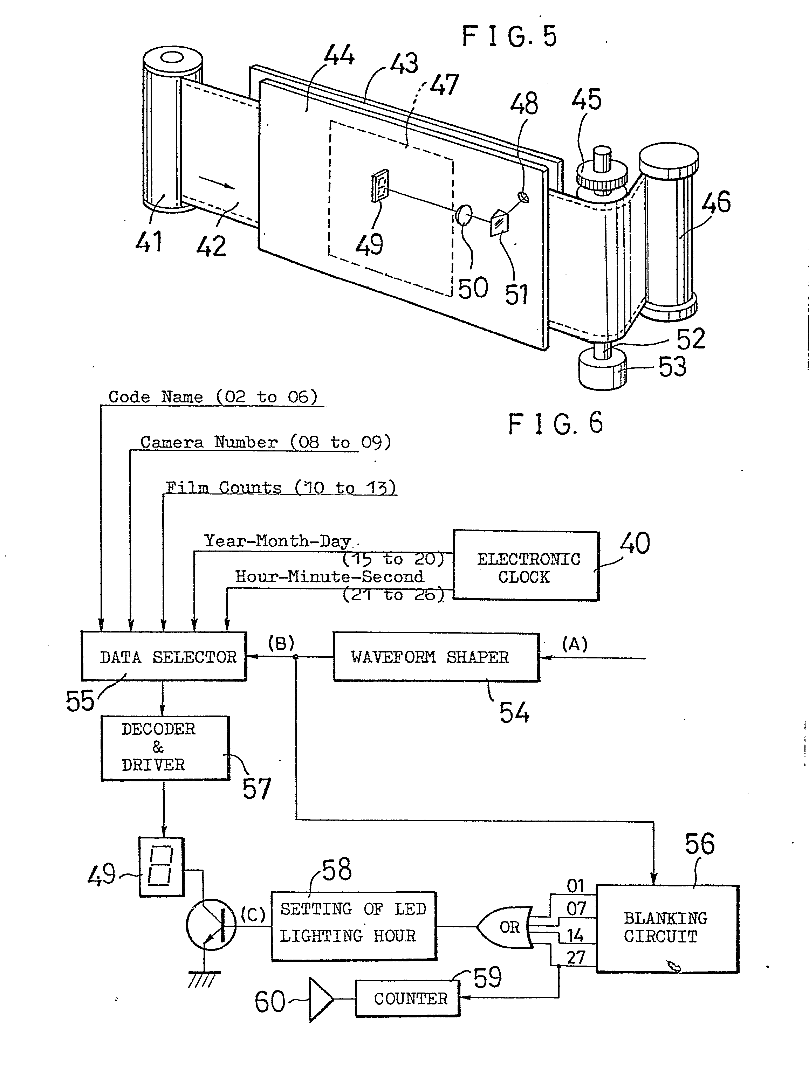

Referring to Figure 5 a data transcribing device will be explained:

A film 42 fed from a magazine 41 passes between a film guide 43 and a film presser 44, and rolls up a spool 46 through a sproket 45. The film presser 44 is provided with a pore 48 for providing an optical path through which the characters of the data are transcribed in the photographs. The pore is located downstream of a shutter window 47 produced in the film guide 43. Behind the film 42 an LED (light-emitting diode) indicator 49 for indicating characters and figures in one digit, a lens 50 and a prism 51 are arranged, which all constitute an optical system for transcribing the data in the photograph. A spindle 52 of the sprocket 45 is provided with an encoder 53 adapted to output pulses at each particular angular displacement of the spindle. For convenience, these pulses will be referred to as the film advance pulse (A). The film is moved by means of an electric motor.

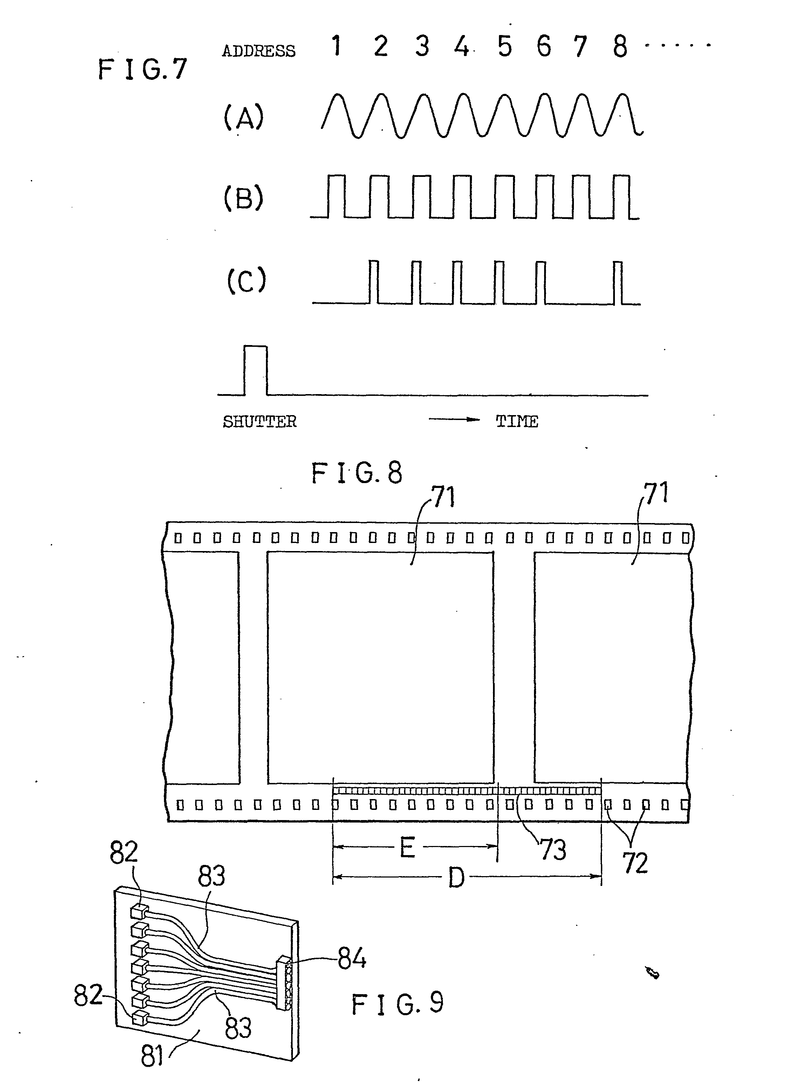

Referring to Figure 6 the film advance pulses (A) are applied to a data selector 55 and a blanking circuit 56 via a waveform shaper 54. The waveform shaper 54 consists of a Schmitt trigger, and as shown in Figure 7, the film advance pulses (A) normally taking the form of sine waves are shaped into rectangular waveforms.

The data selector 55 selects the digits, digit by digit, in the BCD codes, which consists of the code names, the camera numbers, the film counts, and the dates. The selected digits are sent to a decorder and driver circuit 57. In Figure 6 (02 to 06), (08 to 09), (10 to 13), (15 to 20) and (21 to 26) indicate the digits identifying the data to be transcribed in the photographs, while the digits 01, 07, 14, and 27 are blank characters. An electronic clock 40 includes a clock pulse generator, a frequency divider, and a counter of date and time (from year to second). The output therefrom is used for the interval timer 33. The blanking circuit 56 opens and closes the passage of output in accordance with the state of the counting. For example, when a particular state of counting is reached, such as 01, 07, 14 and 27, the blanking circuit provides restraint signals so as to stop the output. The reference numeral 58 designates an LED lighting-time setting circuit, which can output an LED lighting control signals (C) at a specified interval time, provided that the blanking circuit 56 provides no restraint signals. Each LED indicator 47 has its own electrodes driven by signals from the decoder and driver circuit 57 while the electrodes in common are driven by the LED lighting control signals (C). The final shot of the restraint signals from the blanking circuit 56 is used to count down a counter 59 affixed to the display 10, which, as mentioned above, indicates the number of the remaining exposures in the film for subsequent photo-taking. If no exposures remain in the film, an alarm 60 will sound. This also happens when no film is carelessly loaded film runs short, or when the feeding of the film is accidentally stopped. Thus, the data will never fail to be transcribed in each photograph. In one successful experiment forty-five film advance pulses (A) were emitted everytime the film advanced by one exposure, wherein the pulse width of the signals (B) were 23 micro-seconds and that of the LED lighting control signals (C) were 5 micro-seconds.

Figure 8 shows an example of photograph in which the data is transcribed. In this example a roll of film of

Hassel 70 mm magazine was used, and the data was transcribed in a narrow zone 73 of 3.2 mm located between the
image 71 and the perforations 72 wherein the data was
represented in 40 digits at maximum in the range (D),
which provides a maximum space unlikely to overlap the
adjacent ranges. Even in a reduced range (E) unlikely to
overlap with the adjacent photograph 26 digits can be
transcribed.

Referring to Figure 9 a preferred embodiment of the
lighting device for transcribing data in the photographs
will be explained:

A base plate 81 is provided with seven LEDs 82, which
consitute a secondary lighting dot-line 84 through optical
fibres 83. The film 42 runs face to face with the dot-line
84, during which, by selecting the LEDs, the desired
characters are transcribed in the film. The size of each
character is 0.25 mm x 0.35 mm.

The characters can be transcribed at any place in the
photograph; not only outside the image but also within the
image under double exposure. In addition, the characters
can be transcribed not only from the back of a film but
also from the front thereof.

The computerized control of the invention can be
employed for taking photographs not only vertically but
also obliquely to the ground, and it is applicable in
surveying the land: making maps: inspecting the growth

11

of crops and trees, and the condition of rivers, currents
iceberg: inspecting historic remains: inspecting the
environments of big cities: and inspecting a region
destroyed by a fire or earthquake.

ィ 2ノ

CLAIMS

1. A computerized control for aerial photography, comprising means for inputting as data the altitude and speed of flight, means for setting the overlap rate between the adjacent photographs and the lens angles, an arithmetic unit for calculating interval time through arithmetical operations on said altitude, speed, overlap rate and lens angles, and an output device for producing shutter driving signals at said interval time resulting from said arithmetical operations, said signals being produced with respect to all the cameras mounted in the aeroplane, thereby anabling each shutter to be driven at independently different interval time.

2. A computerized control for aerial photography according to Claim 1, further comprising a first optical system for projecting a first image on a film, a second optical system for projecting a second image in a character light emitting device on said film, means for detecting the advance of said film and producing signals in response to each particular advancement thereof, an electric circuit for applying data signals in series to said character light emitting device in response to said film advance signals, and means for intermittently lighting said character light emitting device in response to said film advance signals, said data in characters being transcribed in said film correspondingly to an image provided by said first optical system previously exposed.

3. A computerized control for aerial photography according to Claim 2, wherein a film press means is provided with a pore produced downstream of the flow of said film with respect to a shutter window of said first optical system, said pore being adapted to provide an optical path through which characters in one or less digit are projected on said film.

4. A computerized control for aerial photography according to Claims 2 or 3, wherein the second optical system includes a plurality of light emitting members arranged in a larger range than the size of each character to be projected, said light emitting members including optical fibers whose terminating ends constitute a secondary light emitting face, said light emitting members being selectively lighted, thereby enabling said characters to be projected in said film.

# FIG. 1

F I G. 2

# F I G. 3

F I G. 4

```
                                        ┌─── m9
                                   ╱ CHECK ╲
                                  ╱  ON GS   ╲──────────────→
                                   ╲        ╱
   ┌─────────┐                      ╲      ╱
   │  START  │                         │
   └─────────┘                  ┌──────────────┐ ── m10
        │    ┌── m1             │  GS-SECONDS  │
        │    │                  │  CONVERSION  │
   ┌──────────────┐             └──────────────┘
   │ INPUT OF AL  │                    │
   └──────────────┘             ┌──────────────┐ ── m11
        │                       │  COUNT OF    │
   ┌──────────────┐             │ (A) ÷ GS ... (B) │
   │ BCD-TO-BINARY│             └──────────────┘
   │  CONVERSION  │                    │
   └──────────────┘             ┌──────────────┐ ── m12
        │   ── m2               │ INPUT OF  θ  │
    ╱ CHECK ╲      NO           └──────────────┘
   ╱  ON AL  ╲─────────→               │
    ╲        ╱                  ┌──────────────┐ ── m13
     ╲      ╱  ── m3            │ BCD-TO-BINALY│
        │                       │  CONVERSION  │
       YES                      └──────────────┘
   ┌──────────────┐                    │
   │ INPUT OF OL  │── m4         ┌──────────────┐ ── m14
   └──────────────┘             │  SCANNING OF │
        │                       │ TABLE OF tan θ/2 │
   ┌──────────────┐             └──────────────┘
   │  COUNT OF    │                    │
   │ AL x 2 x (1-OL) │           ┌──────────────┐ ── m15
   │   ....(A)    │             │ COUNT OF tan θ/2 x (B) │
   └──────────────┘             └──────────────┘
        │   ── m5                     │
   ┌──────────────┐          NO   ╱ 1.0 to 999.9 ╲ ── m16
   │ INPUT OF GS  │          ←────╱    secs.     ╲
   └──────────────┘               ╲              ╱
        │   ── m6                       │
   ┌──────────────┐                    YES
   │ BCD-TO-BINARY│             ┌──────────────┐ ── m17
   │  CONVERSION  │             │ BINARY-to-BCD│
   └──────────────┘             │  CONVERSION  │
        │   ── m7               └──────────────┘
   ┌──────────────┐                    │
   │ KNOT OR MILE-TO- │          ┌──────────────┐ ── m18
   │ FEET CONVERSION │          │ DISPLAY OF RESULTS │
   └──────────────┘             │  OF OPERATION │
        │   ── m8               └──────────────┘
                                       │
                                  ╱ CHECK ON ╲ ── m19
                                 ╱ COMPLETION OF ╲  YES
                                ╱ COUNTING UP TO ╲────→
                                 ╲ 4TH SYSTEM    ╱
                                  ╲            ╱
                                       │
                                   ┌───────┐
                                   │  END  │
                                   └───────┘
```

FIG. 5

FIG. 6

Code Name (02 to 06)

Camera Number (08 to 09)

Film Counts (10 to 13)

Year-Month-Day (15 to 20)

Hour-Minute-Second (21 to 26)

ELECTRONIC CLOCK — 40

DATA SELECTOR — 55

(B)

WAVEFORM SHAPER — 54

(A)

DECODER & DRIVER — 57

49

(C)

SETTING OF LED LIGHTING HOUR — 58

OR

01
07
14
27

BLANKING CIRCUIT — 56

60

COUNTER — 59

# FIG.7

ADDRESS 1 2 3 4 5 6 7 8 ·····

(A)

(B)

(C)

SHUTTER ⟶ TIME

# FIG.8

# FIG.9

| Category | Citation of document with indication, where appropriate, of relevant passages | Relevant to claim |
|---|---|---|
| | CH - A - 449 405 (SWISSAIR-PHOTO) <br> * whole document * <br> -- | 1 |
| | US - A - 2 967 470 (S.P. WILLITS et al.) <br> * whole document * <br> -- | 1 |
| | US - A - 3 143 049 (F.E.J. THOLEY) <br> * whole document * <br> -- | 1 |
| | US - A - 3 046 857 (G. KARGL) <br> * claim 1; fig. 3 * <br> -- | 2 |
| | DE - B2 - 2 449 093 (CANON) <br> * fig. 6b, 7, 9 * <br> & US - A - 3 953 868 <br> -- | 2,3 |
| | GB - A - 1 570 884 (AERONAUTICAL & GENERAL INSTRUMENTS) <br> * fig. 1 * <br> ---- | 2,4 |

**DOCUMENTS CONSIDERED TO BE RELEVANT**

CLASSIFICATION OF THE APPLICATION (Int. Cl.³)

G 03 B 37/00
G 01 C 11/02
G 03 B 17/24

TECHNICAL FIELDS SEARCHED (Int. Cl.³)

G 01 C 11/00
G 03 B 17/00
G 03 B 37/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 06-08-1981 | HOPPE |

EPO Form 1503.1 06.78